# EUROPÄISCHE PATENTANMELDUNG

(11) **EP 0 922 628 A1**
(43) Veröffentlichungstag der Anmeldung: **16.06.1999**
(21) Anmeldenummer: 97121740.1
(22) Anmeldetag: 10.12.1997
(51) Int. Cl.: B62D 25/06, B60J 7/11

(54) **Auf einem Fahrzeugdach anbringbare Sonnenschutzeinrichtung**

(71) Anmelder: Meyer, Michael, 92318 Neumarkt/Opf. (DE)
(72) Erfinder: Meyer, Michael, 92318 Neumarkt/Opf. (DE)

(57) **Zusammenfassung**

Es wird ein kofferartiges Element (1) angegeben, das auf einem Fahrzeugdach befestigt werden kann und aus dem zu vier Seiten hin schattenspendende Teile (2-5) herausgezogen oder herausgeklappt werden können.

## Beschreibung

Die Erfindung befasst sich mit Autos im Sommer -und im Winter.

Alle Jahre kommt der Sommer und der Winter.
Der Sommer bringt viel Sonne, der Winter viel Eis-und Schnee. Für uns Menschen ist das eine herrliche Zeit, insbesonders zur Sommerzeit.

Arbeit- **Freizeit-Spiel-und Sport** und das Auto. Im Sommer kocht es, im Winter friert es.

Aber, da will die Erfindung Abhilfe schaffen.
Ein Sonnen-Schutzdach für alle Autos soll es sein.

Ein Sonnen-Schutzdach, das man immer dabei hat.
Das Sonnen-Schutzdach ist fest auf dem Auto (Dachständer-oder anderen Halterungen) montiert.

Wenn man das Auto für eine längere Zeit verlässt, wird der Sonnen-Schutzdachverschluss geöffnet. Die Sonnen-Schutzdachelemente 2 - 6 werden entweder manuell aus dem Sonnen-Schutzdachkoffer (1) herausgezogen (1a), oder aufgeklappt (1b) und festgemacht, oder durch Micro-Electronic, ferngesteuert in Aktion gesetzt.

Ist der Sommer vorbei und der Winter kommt ins Land, wird sich das Sonnen-Schutzdach, wandeln. Statt **Sommer**-Schutz, macht es nun **Winter**-Schutz. Ausgefahren, oder aufgeklappt und arretiert, schützen die Sonnen-Dachelemente die Fensterscheiben vor Eis-und Schnee.

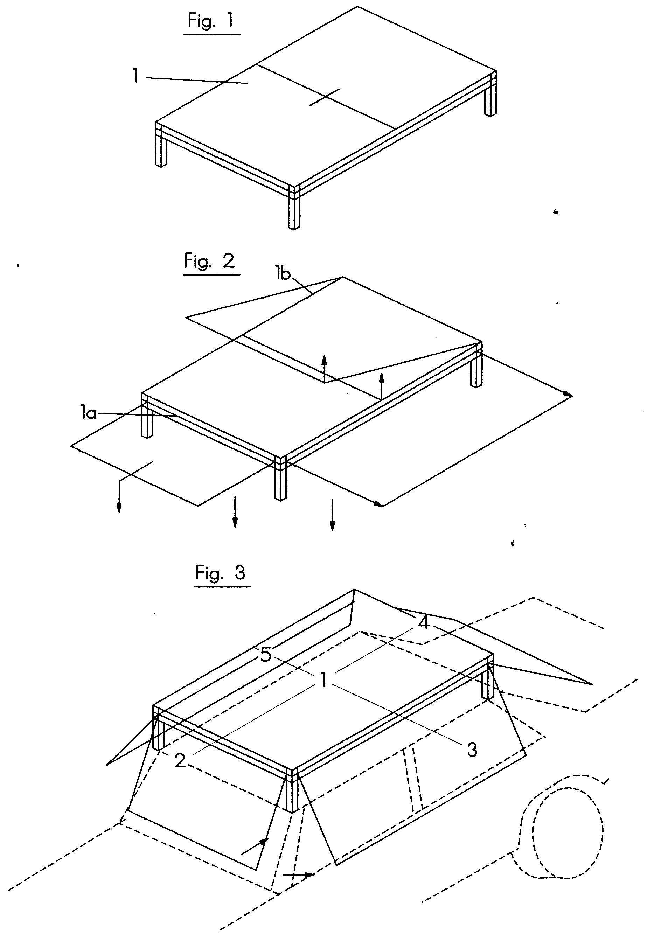

## Patentansprüche

1. Auto-Sonnen-Schutzdach dadurch gekennzeichnet, daß das Auto-Sonnen-Schutzdach aus 1 Sonnen-Schutzdachkoffer (1) und 5 Teilelemente besteht.

2. Auto-Sonnen-Schutzdach nach Anspruch 1 dadurch gekennzeichnet, dass das Auto-Sonnen-Schutzdach auf dem Autodach mittels Dachständer oder anderen Halterungen, befestigt ist.

3. Auto-Sonnen-Schutzdach nach Anspruch 1-2 dadurch gekennzeichnet, daß das Auto-Sonnen-Schutzdach aus allen z.Zt. bekannten und für das Auto-Sonnen-Schutzdach am besten geeigneten Materialien gefertigt sein kann.

4. Auto-Sonnen-Schutzdach nach Anspruch 1-3 dadurch gekennzeichnet, daß das Auto-Sonnen-Schutzdach aus dem Auto-Sonnen-Schutzdachkoffer manuell aus ausgefahren (1a) oder aufgeklappt,(1b) oder durch Micro-Electronic ferngesteuert in Aktion gebracht und arretiert, wird.
